# EUROPEAN PATENT APPLICATION

(11) **EP 4 792 687 A1**
(43) Date of publication of application: **19.08.2026**
(21) Application number: 26156368.8
(22) Date of filing: 04.02.2026
(51) Int. Cl.: A44C 5/24

(54) **CLASP, STRAP, AND TIMEPIECE**

(30) Priority: 14.02.2025 JP 2025022559
(71) Applicant: Seiko Epson Corporation, Tokyo 160-8801 (JP)
(72) Inventor: YAMASHITA, Yuki, Suwa-shi, Nagano, 392-8502 (JP); HIDAI, Yoshihiro, Suwa-shi, Nagano, 392-8502 (JP)
(74) Representative: MERH-IP Matias Erny Reichl Hoffmann Patentanwälte PartG mbB

(57) **Abstract**

A clasp includes a coupling member having an engaged portion, and a clasp main body. The clasp main body includes an engagement member configured to move to an engagement position and a release position, an operation member configured to move the engagement member from the engagement position to the release position, and a lock device configured to move to an operation restriction position and an operation permission position. The engagement member is configured to be engaged with the engaged portion without operating the operation member in a state in which the engagement member is not engaged with the engaged portion, and the engagement is released by moving the engagement member to the release position by the operation member in a state in which the engagement member is engaged with the engaged portion. When the lock device is moved to the operation restriction position, the engagement member is restricted from moving to the release position by the operation member. The operation member includes a projection portion configured to protrude toward the engagement member side.

## Description

The present application is based on, and claims priority from JP Application Serial Number 2025-022559, filed February 14, 2025, the disclosure of which is hereby incorporated by reference herein in its entirety.

### BACKGROUND

### 1. Technical Field

The present disclosure relates to a clasp used for a strap, such as a timepiece strap or a decorative strap, the strap that includes the clasp, and a timepiece that includes the strap.

### 2. Related Art

JP-A-9-56425 discloses a push clasp in which a push operation of a push button can release an engagement between an engagement portion of the push button and an engagement pin of a front panel, and the push operation of the push button can be restricted by moving a lock member. In the push clasp, the lock member is moved to restrict the push operation of the push button, so that it is possible to prevent the engagement of the clasp from being released by an unintended push operation during the diving of a diver and a wristwatch from being dropped.

In the push clasp of JP-A-9-56425, when the lock member is erroneously moved to a position where the push operation is restricted in a state in which the engagement of the clasp is released, the engagement portion of the push button and the engagement pin of the front panel cannot be engaged with each other, and there is a problem that the lock member needs to be operated again.

### SUMMARY

According to an aspect of the present disclosure, there is provided a clasp that couples a first strap and a second strap, the clasp including a coupling member coupled to a first strap side and including an engaged portion, and a clasp main body coupled to a second strap side, in which the clasp main body includes an engagement member configured to move to an engagement position where the engagement member is configured to engage with the engaged portion and a release position where the engagement member is configured to release an engagement with the engaged portion, an operation member configured to move the engagement member from the engagement position to the release position, and a lock device configured to move to an operation restriction position where an operation of the operation member is restricted and an operation permission position where the operation of the operation member is permitted, in a state in which the lock device is at the operation restriction position or the operation permission position, the engagement member is configured to be engaged with the engaged portion without operating the operation member in a state in which the engagement member is not engaged with the engaged portion, the engagement is released by moving the engagement member to the release position by the operation member in a state in which the engagement member is engaged with the engaged portion, when the lock device is moved to the operation restriction position, the engagement member is restricted from moving to the release position by the operation member, and the operation member includes a projection portion configured to protrude toward the engagement member side.

According to another aspect of the present disclosure, there is provided a strap including the clasp, and the first strap and the second strap that are coupled to the clasp.

According to still another aspect of the present disclosure, there is provided a timepiece including the strap.

### BRIEF DESCRIPTION OF THE DRAWINGS

FIG. 1 is a front view illustrating a wristwatch according to a first embodiment.
FIG. 2 is a perspective view illustrating a clasp in an open state of a middle fold member according to the first embodiment.
FIG. 3 is an exploded perspective view of the clasp according to the first embodiment.
FIG. 4 is an exploded perspective view of a clasp main body according to the first embodiment.
FIG. 5 is a perspective view illustrating a main part of a movement operation member and a position holding component according to the first embodiment.
FIG. 6 is a plan view illustrating the clasp main body in an operation permission state according to the first embodiment.
FIG. 7 is a cross-sectional view illustrating the clasp main body in the operation permission state according to the first embodiment.
FIG. 8 is a perspective view illustrating a main part of the clasp main body in the operation permission state according to the first embodiment.
FIG. 9 is a plan view illustrating the clasp main body in a push operation state according to the first embodiment.
FIG. 10 is a cross-sectional view illustrating the clasp main body in the push operation state according to the first embodiment.
FIG. 11 is a plan view illustrating the clasp main body in an operation restriction state according to the first embodiment.
FIG. 12 is a cross-sectional view illustrating the clasp main body in the operation restriction state according to the first embodiment.
FIG. 13 is a perspective view illustrating a main part of the clasp main body in the operation restriction state according to the first embodiment.
FIG. 14 is a perspective view illustrating a main part of a clasp main body in an operation permission state according to a second embodiment.
FIG. 15 is a perspective view illustrating a main part of the clasp main body in an operation restriction state according to the second embodiment.
FIG. 16 is an exploded perspective view of a clasp main body according to a third embodiment.
FIG. 17 is a cross-sectional view illustrating a clasp main body according to the third embodiment.

### DESCRIPTION OF EMBODIMENTS

### First Embodiment

Hereinafter, a first embodiment of the present disclosure will be described with reference to the drawings.

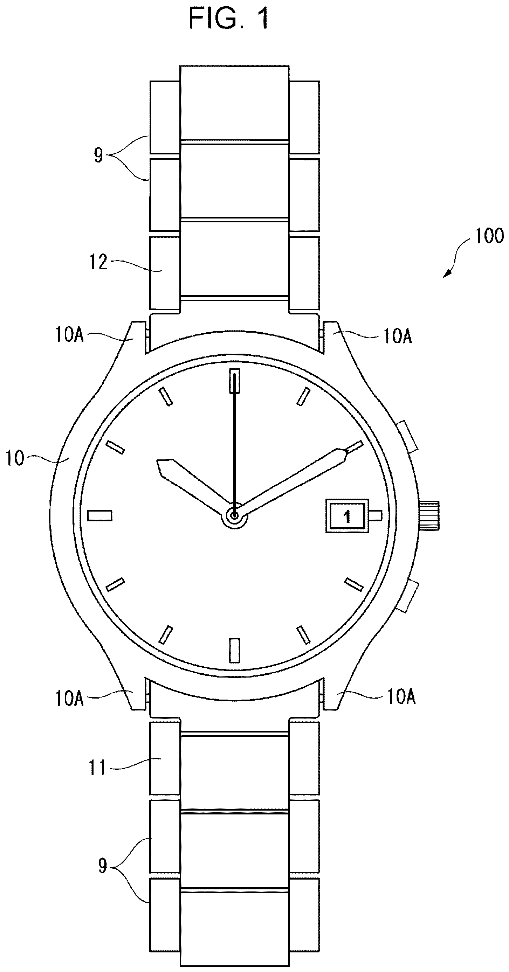

As illustrated in FIG. 1, a wristwatch 100 as a timepiece is provided with an exterior case 10, a first strap 11, and a second strap 12. Each of bows 10A is integrally provided in the six o'clock direction and the twelve o'clock direction of the exterior case 10. The first strap 11 is coupled to the bow 10A in the six o'clock direction using a coupling pin, and the second strap 12 is coupled to the bow 10A in the twelve o'clock direction using a coupling pin.

The first strap 11 and the second strap 12 are constituted by coupling the plurality of strap blocks 9 with pins (not illustrated).

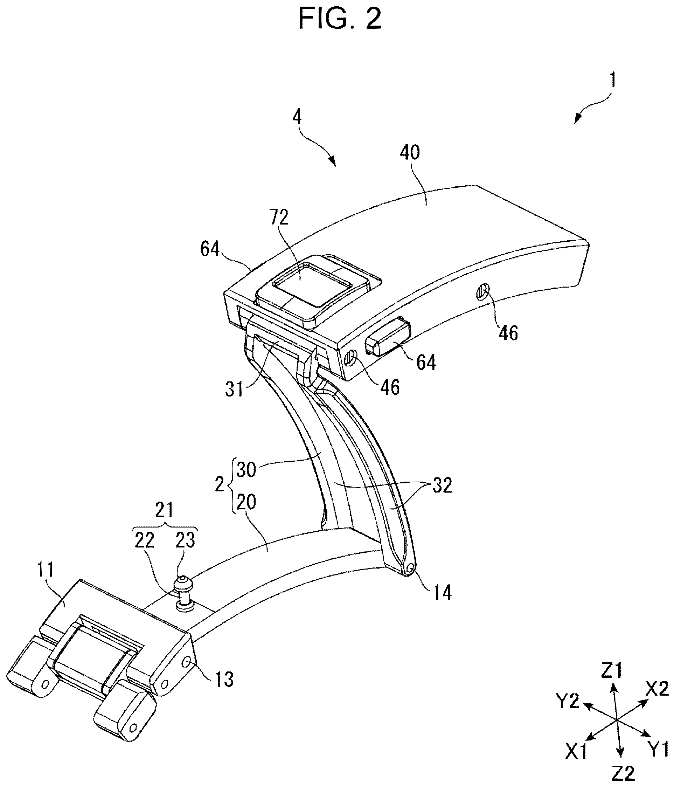

Open end portions of the first strap 11 and the second strap 12 are fastened to each other by a clasp 1 illustrated in FIGS. 2 to 4. Therefore, the strap used for the wristwatch 100 is configured to include the clasp 1, the first strap 11, and the second strap 12.

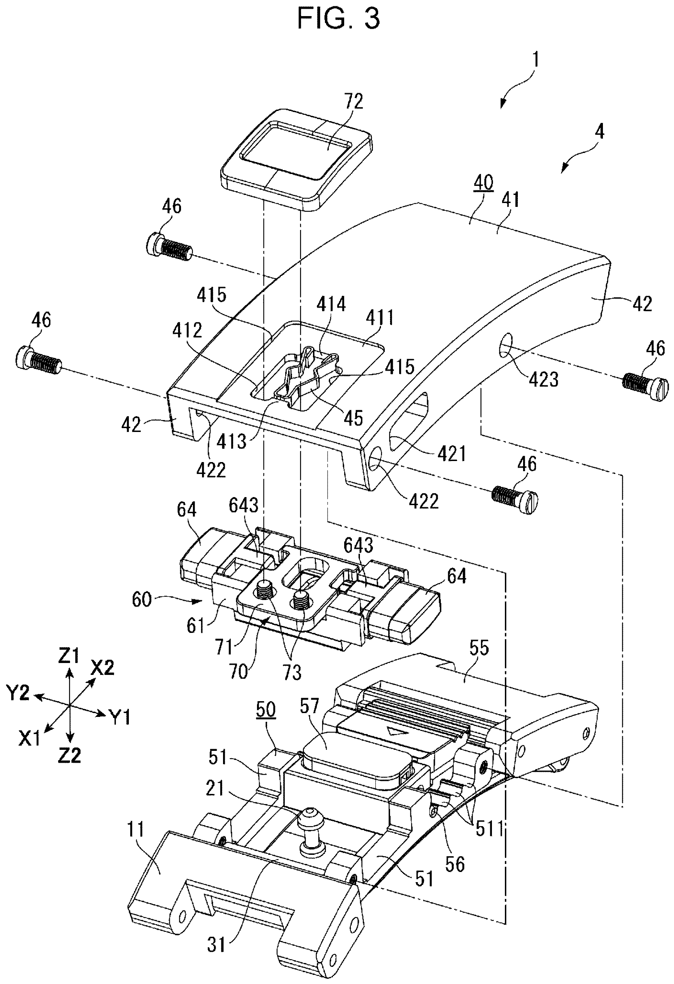

FIG. 2 is a perspective view of the clasp 1 in an open state of a middle fold member 2, and FIG. 3 is an exploded perspective view of the clasp 1.

In the following description, the X axis is an axis along the longitudinal direction of the first strap 11 and the second strap 12. The Y axis is an axis along the width direction of the first strap 11 and the second strap 12, and is orthogonal to the X axis. The Z axis is an axis orthogonal to the X axis and the Y axis. On the X axis, the direction from the clasp main body 4 to the first strap 11 is referred to as an X1 direction, and the direction from the clasp main body 4 to the second strap 12 is referred to as an X2 direction. One direction of the Y axis is referred to as a Y1 direction, and the other direction is referred to as a Y2 direction. On the Z axis, the direction in which the clasp cover 40 is separated from the middle fold member 2 is referred to as a Z1 direction, and the direction in which the clasp cover 40 approaches the middle fold member 2 is referred to as a Z2 direction. In addition, the Z1 direction side of the clasp main body 4 may be expressed as the front surface side of the clasp 1, the Z2 direction side may be expressed as the rear surface side of the clasp 1, the Y1 direction side may be expressed as the left side, and the Y2 direction side may be expressed as the right side. In addition, the state in which the clasp 1 is viewed from the Z axis direction may be expressed as a plan view, and the state in which the clasp 1 is viewed from the Y axis direction may be expressed as a side view.

As illustrated in FIG. 2, the clasp 1 is provided with a middle fold member 2 and a clasp main body 4.

The middle fold member 2 is provided with a middle plate 20 and an outer plate 30.

The middle plate 20 is a member elongated along the X axis direction, which is the longitudinal direction of the first strap 11, and an end portion on the X1 direction side is rotatably coupled to the first strap 11 by a coupling pin 13. An end portion of the middle plate 20 on the X2 direction side is rotatably coupled to one end portion of the outer plate 30 by a coupling pin 14. In addition, the middle plate 20 is provided with a lock pin 21 as an engaged portion that protrudes toward the front surface side. Therefore, the middle plate 20 is a coupling member coupled to the first strap 11 side and has an engaged portion. In addition, the lock pin 21 is provided with a shaft portion 22 protruding from the middle plate 20 and an umbrella portion 23 provided at a tip end of the shaft portion 22.

The outer plate 30 is provided with a shaft portion 31 rotatably coupled to the clasp main body 4, and a pair of outer plate arms 32 extending from both ends of the shaft portion 31 in the Y axis direction along the X axis direction and disposed on both left and right sides of the middle plate 20. As described above, a tip end of the outer plate arm 32 is rotatably coupled to the end portion of the middle plate 20 by the coupling pin 14. Therefore, when the middle fold member 2 is folded, the outer plate arm 32 is disposed on both left and right sides of the middle plate 20, each of the front surface and the rear surface of the middle plate 20 and the outer plate 30 is positioned on substantially the same plane, and the lock pin 21 is constituted to protrude from the front surface of the middle plate 20 and the outer plate 30. Configuration of Clasp Main Body

As illustrated in FIG. 3, the clasp main body 4 includes a clasp cover 40, a clasp frame portion 50, a clasp coupling portion 55, an engagement unit 60, and a lock device 70.

### Configuration of Clasp Cover

As illustrated in FIG. 3, the clasp cover 40 includes a plate-shaped front surface portion 41 curved in an arc shape along the X axis direction, and a pair of side wall portions 42 that protrudes from an outer edge in the Y axis direction, as viewed from the front surface side of the front surface portion 41, toward the rear surface side.

The front surface portion 41 is formed with a recess 411 in which a movement operation member 72 to be described later is disposed to be movable along the X axis direction, which is the longitudinal direction of the clasp cover 40. The recess 411 is formed with an opening 412 having a substantially rectangular shape in plan view. A projection portion 413 is formed at the end surface of the opening 412 on the X1 direction side, and a recessed portion 414 is formed at the end surface on the X2 direction side. In addition, a guide surface 415 is configured to include a pair of side surfaces of the opening 412 along the X axis direction. The guide surface 415 is a surface that guides the movement operation member 72 to be described later along the X axis direction.

Each of the side wall portions 42 is provided with the elongated hole 421 along the X axis direction. Each push button 64 to be described later is disposed in the elongated hole 421. In addition, the pair of side wall portions 42 is formed with through-holes 422 and 423 into which screws 46 for fixing the clasp cover 40 to the clasp frame portion 50 are inserted.

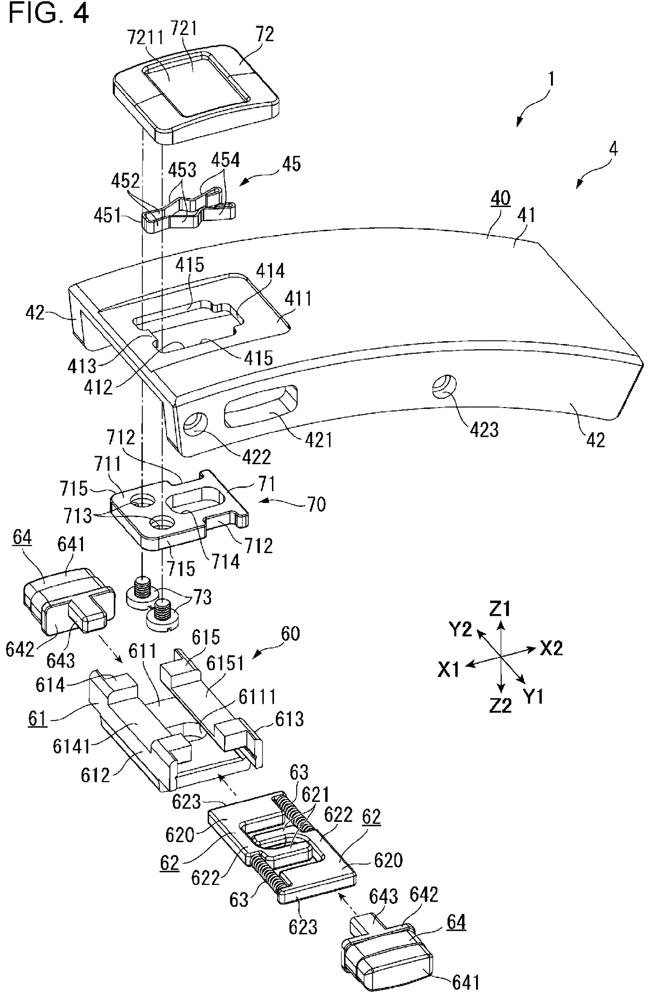

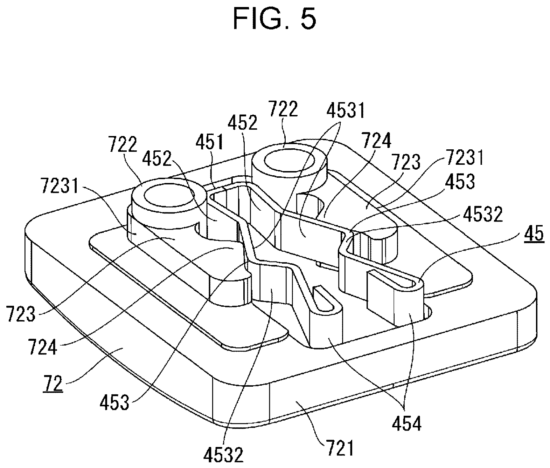

As illustrated in FIGS. 3 and 4, a position holding component 45 is disposed between the projection portion 413 and the recessed portion 414 of the opening 412. The position holding component 45 is a component that holds the lock device 70 to be described later at an operation permission position and an operation restriction position, is formed by bending a metal material, and includes a base portion 451, a pair of extension portions 452, a pair of holding portions 453, and a pair of locking portions 454, as illustrated in FIGS. 4 and 5.

The base portion 451 is formed along the Y axis direction. The pair of extension portions 452 extends from both ends of the base portion 451 in the X2 direction.

The pair of holding portions 453 includes a first inclined surface portion 4531 extending in a direction away from each other from the end portion of the base portion 451 on the X2 direction side, and a second inclined surface portion 4532 extending in the direction approaching each other from the end portion of the first inclined surface portion 4531 on the X2 direction side. A coupling portion of the first inclined surface portion 4531 and the second inclined surface portion 4532 protrudes toward the outside to be formed in a protruding shape. In addition, the inclination angle of the first inclined surface portion 4531 with respect to the X axis direction is, for example, 30 degrees. The inclination angle of the second inclined surface portion 4532 with respect to the X axis direction is, for example, 40 degrees, and is set to be larger than the inclination angle of the first inclined surface portion 4531.

The pair of locking portions 454 extends from the end portion of the second inclined surface portion 4532 on the X2 direction side in a direction away from each other, and are further folded back inward.

The position holding component 45 abuts the base portion 451 against the projection portion 413 of the clasp cover 40, and disposes the pair of locking portions 454 in the recessed portion 414. At this time, the pair of locking portions 454 of the position holding component 45 is larger than the width dimension of the recessed portion 414 in the Y axis direction in a free state in which the pair of locking portions 454 are not disposed in the opening 412. Therefore, when the locking portion 454 is disposed in the recessed portion 414, the locking portion 454 is biased in a direction away from each other, and thus abuts against the surfaces of the recessed portion 414 facing each other. Therefore, the position holding component 45 has spring properties, and the holding portion 453 is biased in a direction away from each other by the spring properties.

### Configuration of Clasp Frame Portion

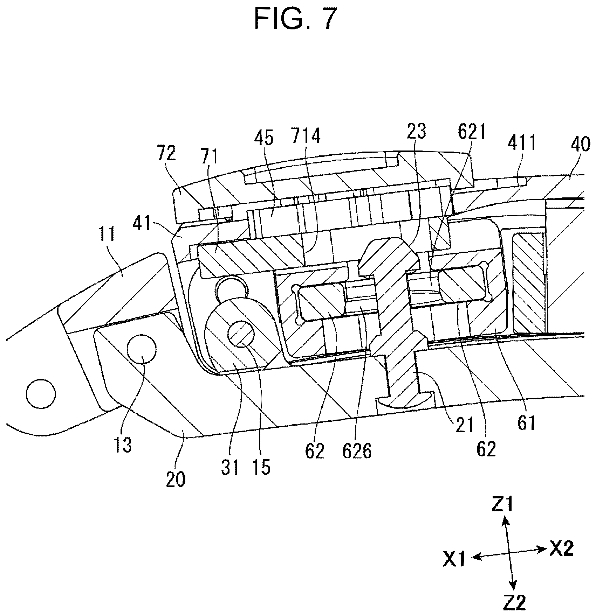

As illustrated in FIG. 3, the clasp frame portion 50 is configured to include a pair of frames 51 coupled to the shaft portion 31 of the outer plate 30 by a coupling pin 15 (refer to FIG. 7). Each frame 51 is fixed to each side wall portion 42 of the clasp cover 40 with the screw 46. Each of the frames 51 is formed with a guide groove portion 511 in which a coupling position with the clasp coupling portion 55 can be changed in a plurality of stages. Configuration of Clasp Coupling Portion

The clasp coupling portion 55 is coupled to the second strap 12, and includes a holding unit 57 that holds an engagement pin 56 engaged with the guide groove portion 511. The engagement pin 56 is disposed between the clasp cover 40 and the clasp frame portion 50. The holding unit 57 is biased to the clasp frame portion 50 side with respect to the clasp cover 40 by a built-in spring, and engages the engagement pin 56 with the guide groove portion 511. By pushing the holding unit 57 from the rear surface side toward the clasp cover 40 side, the engagement pin 56 can be moved to the other guide groove portion 511, and thus the clasp cover 40 and the clasp frame portion 50 can be slid with respect to the second strap 12 in a plurality of stages.

### Configuration of Engagement Unit

As illustrated in FIG. 4, the engagement unit 60 includes a guide frame 61, a pair of slide plates 62, which is an engagement member, a pair of coil springs 63, which is a biasing member, and a pair of push buttons 64, which is an operation member.

The guide frame 61 includes a bottom surface portion 611, side surface portions 612 and 613, guide portions 614 and 615, and front surface portions 6141 and 6151.

The bottom surface portion 611 is formed in a rectangular plate shape, and an insertion hole 6111 into which the lock pin 21 is inserted is formed.

The side surface portions 612 and 613 are formed to protrude from the outer edge of the bottom surface portion 611 in the X1 direction and the X2 direction toward the front surface side. The interval between the side surface portions 612 and 613 in the X axis direction is a dimension that matches the width dimension of the slide plate 62.

The guide portion 614 and the front surface portion 6141 are projected from the side surface portion 612 in the X2 direction. The guide portion 615 and the front surface portion 6151 are projected from the side surface portion 613 in the X1 direction. The guide portions 614 and 615 are provided to be thicker than the thickness, that is, the thickness dimension in the Z axis direction, than the front surface portions 6141 and 6151, and a pair of guide portions 614 and 615 is provided to be separated from each other in the Y axis direction with the front surface portions 6141 and 6151 interposed therebetween. Therefore, a recessed groove defined by each of the guide portions 614 and 615 and the front surface portions 6141 and 6151 is formed at the front surface side of the guide frame 61, and a lock member 71 to be described later is disposed in the recessed groove. Therefore, the lock member 71, by being disposed in the recessed groove, is guided so as to be slidably movable in the X axis direction and immovable in the Y axis direction.

In addition, the guide portion 614 and the front surface portion 6141, and the guide portion 615 and the front surface portion 6151 are separated from each other in the X axis direction, and a groove that is continuous in the Y axis direction is formed therebetween. The groove is configured so that a projection portion 643 of the push button 64 to be described later can be disposed therein.

The interval between the side surface portions 612 and 613 in the X axis direction is set in accordance with the width dimension of the slide plate 62, that is, the dimension in the X axis direction. In addition, the interval between the bottom surface portion 611, the guide portions 614 and 615, and the front surface portions 6141 and 6151 in the Z axis direction is set in accordance with the thickness dimension of the slide plate 62. Therefore, when the pair of slide plates 62 is inserted between the side surface portions 612 and 613 and between the bottom surface portion 611, the guide portions 614 and 615, and the front surface portions 6141 and 6151, the slide plates 62 are disposed to be movable only in the Y axis direction. Configuration of Slide Plate

As illustrated in FIG. 4, each slide plate 62 includes a main body portion 620, an engagement portion 621, and a coupling portion 622 that couples the main body portion 620 and the engagement portion 621. The engagement portion 621 of one slide plate 62 is disposed between the engagement portion 621 of the other slide plate 62 and the main body portion 620. Similarly, the engagement portion 621 of the other slide plate 62 is disposed between the engagement portion 621 of one slide plate 62 and the main body portion 620. Therefore, when each of the engagement portions 621 is disposed to face each other, and each of the slide plates 62 approaches each other, each of the engagement portions 621 moves in a direction in which the engagement portions 621 are separated, and when each of the slide plates 62 moves in a direction in which the slide plates 62 are separated, each of the engagement portions 621 moves in a direction in which the engagement portions 621 approach each other. Therefore, the pair of slide plates 62 as the engagement members can be moved between an engagement position where the pair of engagement portions 621 approaches each other and can be engaged with the lock pin 21 as an engaged portion, and a release position where the pair of engagement portions 621 is separated from each other and the engagement with the lock pin 21 as an engaged portion can be released.

An end surface of the main body portion 620 in the Y axis direction is an abutment surface 623 that abuts against a push button 64 to be described later.

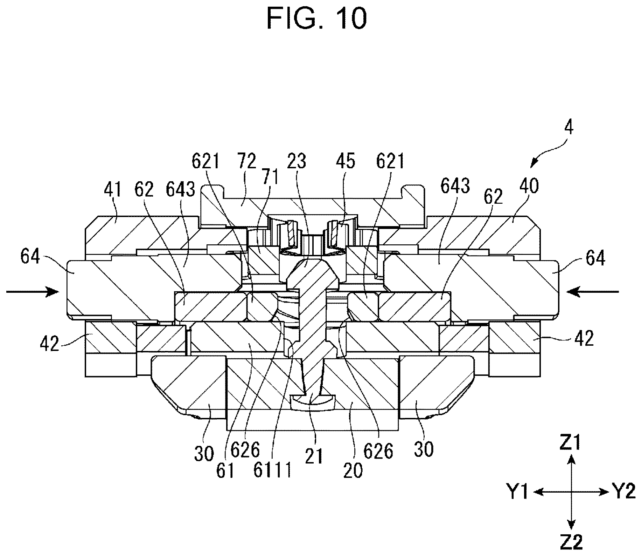

As illustrated in FIGS. 7 and 10, inclined surfaces 626 inclined in a direction away from each other from the front surface side toward the rear surface side are formed at the facing surfaces of the engagement portions 621 facing each other. The inclined surface 626 is continuously formed from the intermediate position on the facing surface of the engagement portion 621 in the Z axis direction to the lower end in the Z2 direction. Therefore, each engagement portion 621 has a claw shape in which the thickness dimension in the Z axis direction is reduced toward the engagement portion 621 facing each other.

As illustrated in FIG. 4, the coil spring 63 as a biasing member is disposed between the main body portion 620 and the coupling portion 622, and biases the pair of slide plates 62 in a direction in which the slide plates 62 are separated from each other in the Y axis direction. When each slide plate 62 moves in a direction in which the slide plates 62 are separated from each other, each engagement portion 621 moves in a direction in which the engagement portions 621 approach each other. At this time, when the shaft portion 22 of the lock pin 21 is disposed between the engagement portions 621, the interval between the engagement portions 621 is smaller than that of the umbrella portion 23 and is prevented from falling out, and thus, each engagement portion 621 can be engaged with the lock pin 21 as an engaged portion.

The pair of push buttons 64 is an operation member that moves each of the pair of slide plates 62 as an engagement member from the engagement position to the release position. The push button 64 includes a button main body 641, a flange portion 642 formed at an end surface of the button main body 641, and the projection portion 643 that protrudes from the flange portion 642 in the Y axis direction, that is, toward the slide plate 62 side. The button main body 641 is inserted into the elongated hole 421 of the side wall portion 42 from the inside of the clasp cover 40, and the flange portion 642 is locked to the side wall portion 42, so that the push button 64 is prevented from falling out to the outside.

In each push button 64, the end surface on which the flange portion 642 is formed abuts against the slide plate 62, and the slide plate 62 is biased in a direction in which the slide plate 62 is separated from each other by the coil spring 63. Therefore, each push button 64 is also biased in a direction in which the push buttons 64 are separated from each other in the Y axis direction, the flange portion 642 abuts against the inner surface of the side wall portion 42, and the button main body 641 protrudes from the elongated hole 421 toward the outside of the side wall portion 42.

In addition, when the button main body 641 of the push button 64 is pressed by the user and approaches each other, each slide plate 62 moves in a direction in which the slide plates 62 approach each other in the Y axis direction, and each engagement portion 621 moves in a direction in which the engagement portions 621 are away from each other. At this time, when each engagement portion 621 is engaged with the lock pin 21, the interval between the engagement portions 621 is larger than the diameter of the umbrella portion 23 of the lock pin 21, and the engagement with the lock pin 21 can be released.

Furthermore, since the inclined surface 626 is formed in the engagement portion 621 of the slide plate 62, when the umbrella portion 23 of the lock pin 21 abuts against the inclined surface 626 from the rear surface side of the engagement portion 621, the inclined surface 626 is pushed to the outside by the umbrella portion 23. Therefore, the slide plate 62 moves in a direction in which the slide plates 62 approach each other against the biasing force of the coil spring 63, and the engagement portions 621 move in a direction away from each other. When the umbrella portion 23 rides over the engagement portion 621, the slide plate 62 is biased in a direction away from each other by the coil spring 63, the engagement portions 621 approach each other, and are engaged with the shaft portion 22 of the lock pin 21.

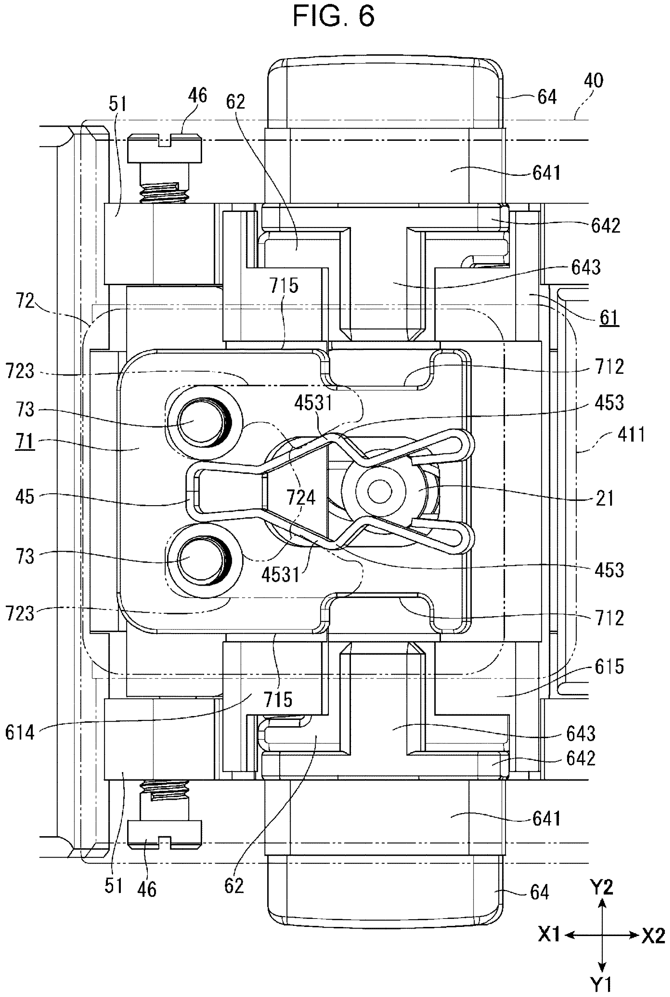

The projection portion 643 of the push button 64 is provided at the center position in the X axis direction in the flange portion 642, and is provided at the end portion on the clasp cover 40 side, that is, on the Z1 direction side in the Z axis direction. Therefore, as illustrated in FIG. 6, the projection portion 643 is disposed between the guide portions 614 and 615 in the X axis direction. In addition, as illustrated in FIG. 10, the projection portion 643 is provided to overlap the front surface side of the slide plate 62, that is, the surface on the Z1 side in the Z axis direction, and is disposed between the slide plate 62 and the clasp cover 40. That is, the projection portion 643 of the push button 64, which is an operation member, is disposed in a space provided between the clasp cover 40, which is a cover member, and the slide plate 62, which is an engagement member, in a side view.

Therefore, the push button 64 is guided by the guide portions 614 and 615 in the X axis direction and the projection portion 643 is guided by the slide plate 62 and the clasp cover 40 in the Z axis direction. Therefore, the play in the X axis direction and the Z axis direction is suppressed.

### Configuration of Lock Device

The lock device 70 is set by switching between an operation restriction state in which the push operation of the push button 64, which is an operation member, is restricted and an operation permission state in which the push operation is permitted. As illustrated in FIG. 4, the lock device 70 is provided with a lock member 71, a movement operation member 72 that moves the lock member 71, and a fixing screw 73 that fixes the movement operation member 72 to the lock member 71.

The lock member 71 is configured to include a substantially rectangular plate-shaped main body portion 711 disposed in a recessed groove defined by the guide portions 614 and 615 of the guide frame 61 and the front surface portions 6141 and 6151. Each of recessed portions 712 is formed at both side surfaces of the main body portion 711 along the X axis direction. The recessed portion 712 is formed to have a size that allows the tip end of the projection portion 643 to be disposed when the push button 64 is depressed. In addition, the main body portion 711 is formed with two through-holes 713 and an elongated hole 714, which penetrate in the Z axis direction and through which the fixing screw 73 is inserted. The elongated hole 714 is an elongated hole extending in the X axis direction, and is configured such that the lock pin 21 can be disposed in the elongated hole 714 even when the lock member 71 is slid and moved in the X axis direction.

Furthermore, both side surfaces of the main body portion 711 are the abutment surfaces 715 that abut against the tip end of the projection portion 643 and restrict the depressing operation of the push button 64 when the push button 64 is depressed in a state in which the lock member 71 is disposed at the operation restriction position.

The movement operation member 72 includes an operation panel 721 disposed in the recess 411 of the clasp cover 40 and slid in the X axis direction by the user.

The operation panel 721 is provided with a logo display portion 7211 capable of displaying a logo. The logo displayed on the logo display portion 7211 includes at least one of a character, a number, a symbol, and a figure, and represents a brand or a manufacturer of the timepiece.

As illustrated in FIG. 5, the lower surface of the operation panel 721 is provided with a pair of fixing shaft portions 722 and a pair of guide portions 723.

Each of the pair of fixing shaft portions 722 is formed in a substantially cylindrical shape, and a screw hole into which the fixing screw 73 is screwed is formed therein. In addition, the tip end of the fixing shaft portion 722 on the Z2 direction side is formed to be insertable into the through-hole 713 of the lock member 71.

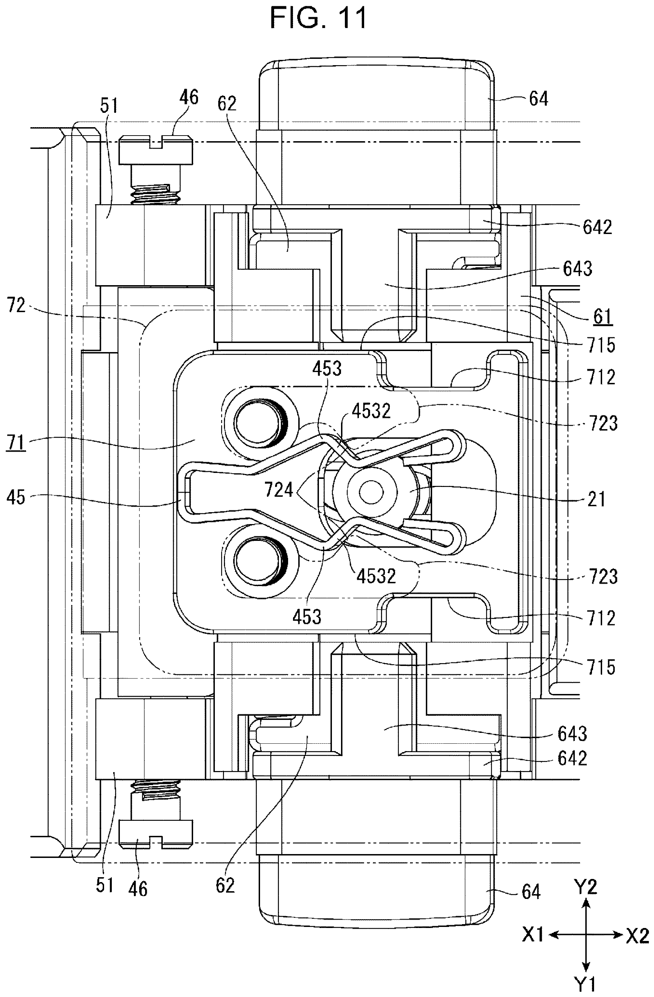

The pair of guide portions 723 extends from each of the fixing shaft portions 722 in the X2 direction, and includes a pair of protrusion portions 724 that protrudes in the direction approaching each other. Each of the protrusion portions 724 is configured to include an inclined surface on the X2 direction side that abuts against the first inclined surface portion 4531, as illustrated in FIG. 6, and an inclined surface on the X1 direction side that abuts against the second inclined surface portion 4532, as illustrated in FIG. 11, and the inclination angle of each of the inclined surfaces with respect to the X axis direction is set in accordance with the inclination angles of the first inclined surface portion 4531 and the second inclined surface portion 4532. Therefore, the inclination angle of the inclined surface of the protrusion portion 724 on the X2 direction side with respect to the X axis direction is set to be smaller than the inclination angle of the inclined surface of the protrusion portion 724 on the X1 direction side with respect to the X axis direction.

In addition, the outer peripheral surfaces of the pair of guide portions 723 in the Y axis direction are movement direction restricting surfaces 7231 along the X axis direction. The movement direction restricting surface 7231 is a flat surface that can abut against the guide surface 415 of the front surface portion 41, and the movement operation member 72 is smoothly moved in the X axis direction by the movement direction restricting surface 7231 being guided by the guide surface 415.

The fixing screw 73 is screwed into the fixing shaft portion 722 inserted through the through-hole 713 with the lock member 71 interposed therebetween, and fixes the movement operation member 72 to the lock member 71. Therefore, the lock member 71 and the movement operation member 72 that constitute the lock device 70 are integrally moved in the X axis direction. A recessed portion in which a head portion of the fixing screw 73 is accommodated is formed at the rear surface of the lock member 71, and the lock member 71 is configured so that the fixing screw 73 does not protrude from the rear surface of the lock member 71.

The movement operation member 72 and the lock member 71, which are the lock device 70, are provided to be slidably movable in the X axis direction with respect to the clasp cover 40, move in the X1 direction as illustrated in FIGS. 6 to 10 to move the lock device 70 to the operation permission position, and move in the X2 direction as illustrated in FIGS. 11 to 13 to move the lock device 70 to the operation restriction position.

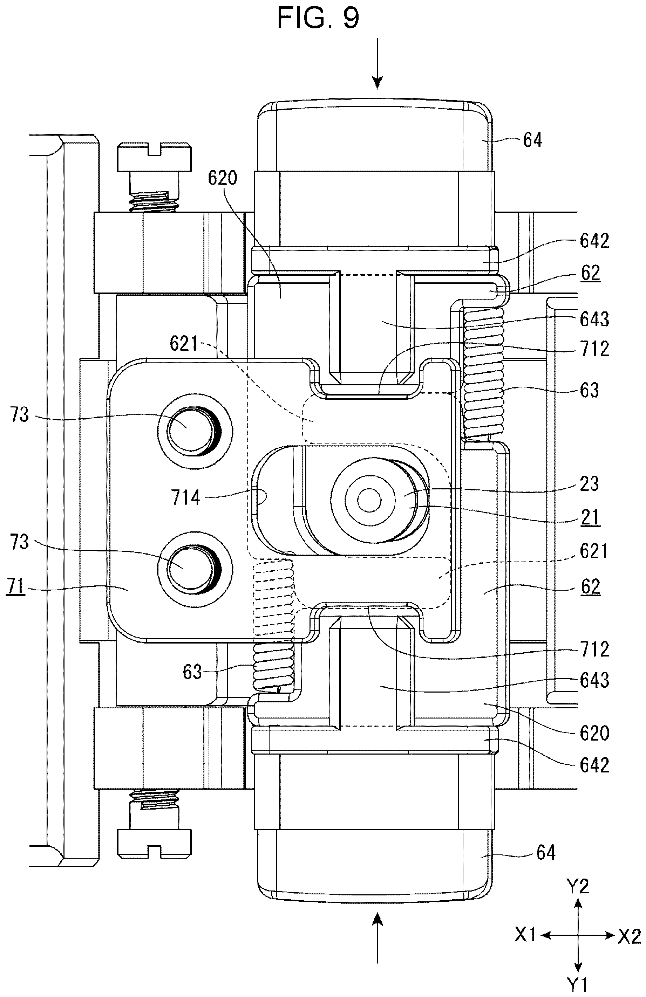

The operation permission position is a position where the recessed portion 712 is disposed on the extension line of the projection portion 643, as illustrated in FIG. 6, and is a position where the projection portion 643 can be disposed in the recessed portion 712 when the push button 64 is pressed, as illustrated in FIG. 9. As illustrated in FIG. 11, the operation restriction position is a position where the recessed portion 712 is disposed at a position shifted from the extension line of the projection portion 643, and is a position where the projection portion 643 abuts against the abutment surface 715 of the lock member 71 and cannot be depressed when the push button 64 is pressed.

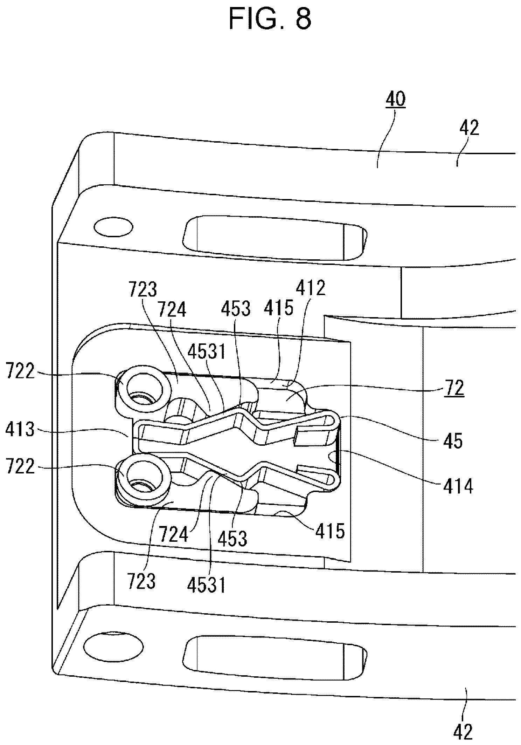

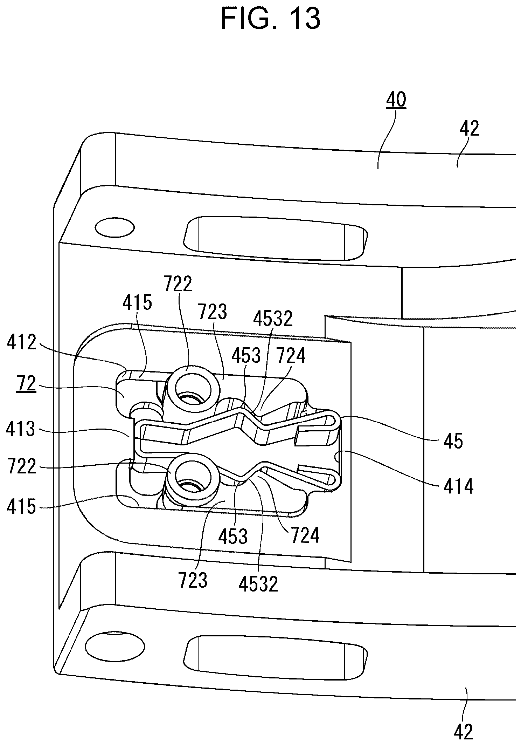

When the lock device 70 is positioned at the operation permission position, as illustrated in FIGS. 6 and 8, the protrusion portion 724 of the movement operation member 72 abuts against the first inclined surface portion 4531 of the position holding component 45. From this state, when the movement operation member 72 is moved in the X2 direction, the protrusion portion 724 presses the first inclined surface portion 4531 of the holding portion 453, and the extension portion 452, the holding portion 453, and the locking portion 454 are elastically deformed by the spring property of the position holding component 45 and are deformed in the direction approaching each other. When the protrusion portion 724 moves to a position where the protrusion portion 724 rides over the first inclined surface portion 4531 and abuts against the second inclined surface portion 4532, as illustrated in FIGS. 11 and 13, the extension portion 452, the holding portion 453, and the locking portion 454 return to the original state by the spring property of the position holding component 45.

In addition, even when the movement operation member 72 and the lock member 71 are slid and moved in the X1 direction from the movement restriction position to move to the movement restriction position, the protrusion portion 724 moves by riding over the holding portion 453. Therefore, when the user slides the movement operation member 72, the click feeling is transmitted when the protrusion portion 724 rides over the holding portion 453, and the user can recognize that the lock member 71 is moved to the operation restriction position or the operation permission position. In addition, since the holding portions 45 are biased in the direction in which the holding portions 453 are separated from each other by the spring property of the position holding component 45, the first inclined surface portion 4531 or the second inclined surface portion 4532 of the position holding component 45 is pressed against the protrusion portion 724 of the lock member 71. Therefore, unless the user slides the movement operation member 72, the lock member 71 is maintained in either the operation restriction position or the operation permission position. That is, the protrusion portion 724 of the lock member 71 is engaged with the holding portion 453 of the position holding component 45, and thus the lock member 71 is held at the operation restriction position or the operation permission position.

Furthermore, when the protrusion portion 724 abuts against the holding portion 453, the extension portion 452, the holding portion 453, and the locking portion 454 of the position holding component 45 are bent and elastically deformed in the direction approaching each other as a whole. At this time, since the base portion 451 serves as a fulcrum, the position holding component 45 can be deformed with a small force as the position where the position holding component 45 is pressed is separated from the base portion 451. In the present embodiment, the holding portion 453 pressed by the protrusion portion 724 is provided between the extension portion 452 and the locking portion 454. Therefore, the holding portion 453 can be deformed with a smaller force as compared with the case where the holding portion 453 is pressed and elastically deformed at the position of the extension portion 452, and the holding portion 453 can be deformed with a larger force as compared with the case where the holding portion 453 is pressed and elastically deformed at the position of the locking portion 454. Therefore, the operation load of the movement operation member 72 by the user can be appropriately set.

In addition, by setting the inclination angles with respect to the X axis direction of the first inclined surface portion 4531 and the second inclined surface portion 4532 of the holding portion 453 and each of the inclined surfaces of the protrusion portion 724 that are in contact with the first inclined surface portion 4531 and the second inclined surface portion 4532 in the X axis direction, the setting of the operation load of the lock device 70 can be adjusted. In the present embodiment, the inclination angles of the first inclined surface portion 4531 of the holding portion 453 and the inclined surface of the protrusion portion 724 on the X1 direction side are approximately 30 degrees, and the inclination angles of the second inclined surface portion 4532 of the holding portion 453 and the inclined surface of the protrusion portion 724 on the X2 direction side are approximately 40 degrees. Therefore, the operation load when the lock device 70 is moved in the X2 direction, that is, to the operation restriction position, can be adjusted to be smaller than the operation load when the lock device 70 is moved in the X1 direction, that is, to the operation permission position.

Next, an operation permission state and an operation restriction state of the push button 64 by the lock device 70 will be described.

### Operation Permission State

As illustrated in FIGS. 6 and 7, a state in which the movement operation member 72 is moved to the X1 direction side is the operation permission state. In the operation permission state, the lock member 71 is moved to the X1 direction side, and the recessed portion 712 is disposed at a position facing the projection portion 643 of the push button 64 in the Y axis direction. In the operation permission state illustrated in FIG. 6, each slide plate 62 is biased in a direction in which the slide plates 62 are separated from each other by the coil spring 63, and each engagement portion 621 is moved in a direction in which the engagement portions 621 approach each other and is engaged with the lock pin 21. In addition, the slide plate 62 abuts against the push button 64, and the push button 64 is biased to a state in which the flange portion 642 abuts against the side wall portion 42.

In the operation permission state, the projection portion 643 of the push button 64 is disposed at a position facing the recessed portion 712 of the lock member 71. Therefore, as illustrated in FIG. 9, when the user performs a push operation of the push button 64, the tip end of the projection portion 643 is accommodated in the recessed portion 712, and thus the push button 64 can be depressed. As a result, the pair of slide plates 62 moves in the direction approaching each other and moves to the release position. Therefore, as illustrated in FIGS. 9 and 10, the interval between each engagement portion 621 is larger than the umbrella portion 23 of the lock pin 21, and the engagement state with the lock pin 21 can be released. In the present embodiment, the release position of the slide plate 62 is a position where one engagement portion 621 abuts against the other main body portion 620. Therefore, the user can reliably move the slide plate 62 to the release position by depressing the push button 64 until the push button 64 cannot be moved.

### Operation Restriction State

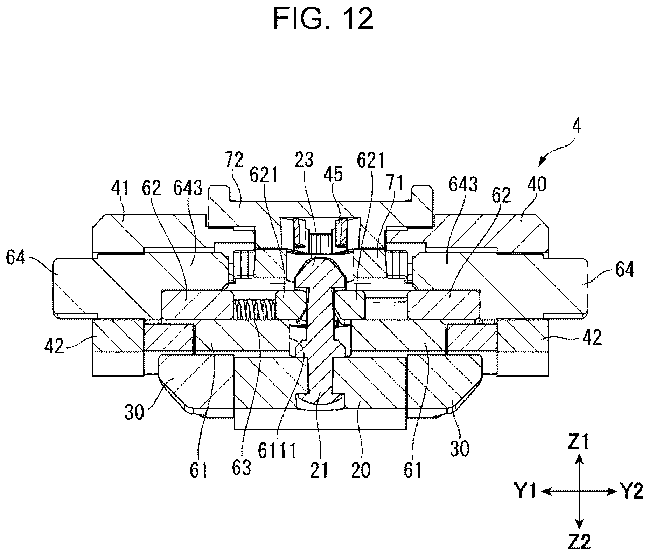

As illustrated in FIGS. 11 and 12, a state in which the movement operation member 72 is moved to the X2 direction side is the operation restriction state. In the operation restriction state, the lock member 71 is moved to the X2 direction side. Even in the operation restriction state, as illustrated in FIG. 12, each slide plate 62 is biased in a direction in which the slide plates 62 are separated from each other by the coil spring 63, and each engagement portion 621 is moved in a direction in which the engagement portions 621 approach each other and is engaged with the lock pin 21.

In the operation restriction state, as illustrated in FIG. 11, the recessed portion 712 is disposed at a position that does not face the projection portion 643 of the push button 64. Therefore, even when the user performs a push operation of depressing the push button 64, since the push button 64 abuts against the abutment surface 715 of the lock member 71, the movement of the push button 64 is restricted. Therefore, the operation of the push button 64 is restricted, the slide plate 62 is maintained in a separated state by the coil spring 63, and the engagement state between the lock pin 21 and the engagement portion 621 is also maintained. Method of Using Wristwatch

Next, a method of wearing the wristwatch 100 on the wrist of the user will be described.

In the operation restriction state illustrated in FIG. 11, the lock member 71 restricts the push operation of the push button 64, but does not restrict the movement of the pair of slide plates 62 in the direction approaching each other.

Therefore, in a state in which the middle plate 20 and the outer plate 30 of the middle fold member 2 are opened as illustrated in FIG. 2, not only when the lock member 71 is positioned at the operation permission position, but also when the lock member 71 is positioned at the operation restriction position, the middle plate 20 and the outer plate 30 are closed to press the slide plate 62 of the clasp main body 4 against the lock pin 21, so that the slide plate 62 is engaged with the lock pin 21 and the wristwatch 100 can be worn without performing the push operation of the push button 64.

That is, the upper end of the lock pin 21 is a conical trapezoidal umbrella portion 23, and the diameter of an upper bottom of the umbrella portion 23 is smaller than the diameter of a lower bottom of the umbrella portion 23. In addition, the lower side of the facing surfaces of the pair of engagement portions 621 is an inclined surface 626 inclined in a direction away from each other. The dimension between the lower ends of each inclined surface 626 is larger than the diameter of the upper bottom of the umbrella portion 23, and the dimension between the upper ends of each inclined surface 626 is smaller than the diameter of the lower bottom of the umbrella portion 23. Therefore, when the middle fold member 2 is closed and the umbrella portion 23 is inserted between the engagement portions 621, the side surface of the umbrella portion 23 abuts against the inclined surface 626, and the pair of engagement portions 621, that is, the pair of slide plates 62, is pushed outward against the biasing force of the coil spring 63. Therefore, the side surface of the umbrella portion 23 of the lock pin 21 as the engaged portion and the inclined surface 626 of the slide plate 62 as the engagement member are guide surfaces that move the slide plate 62 from the engagement position to the release position against the biasing force of the coil spring 63 when the engagement portion 621 of the slide plate 62 abuts against the lock pin 21.

Furthermore, when the clasp main body 4 is depressed toward the middle plate 20 side, the umbrella portion 23 of the lock pin 21 is removed from the facing surface of the engagement portion 621, and the shaft portion 22 is disposed between the engagement portions 621. Therefore, the engagement portion 621 which is pushed by the umbrella portion 23 moves in the direction in which the engagement portions 621 approach each other by the biasing force of the coil spring 63. As a result, each engagement portion 621 abuts against and engages with the shaft portion 22 of the lock pin 21. In this manner, the wristwatch 100 can be worn on the wrist.

Next, a method of locking the wristwatch 100 so that the wristwatch 100 is not removed from the wrist by diving or the like will be described. When the wristwatch 100 is worn on the wrist and the lock member 71 is at the operation permission position, the movement operation member 72 may be moved to the X2 direction side, and the recessed portion 712 of the lock member 71 may be moved to the operation restriction position where the recessed portion 712 does not face the projection portion 643 of the push button 64. In addition, when the wristwatch 100 is worn on the wrist, the state may be maintained when the lock member 71 is already at the operation restriction position.

When the lock member 71 is at the operation restriction position, even when an unintended external force is applied to the push button 64, the recessed portion 712 of the lock member 71 is shifted from the position facing the projection portion 643. Therefore, the push button 64 is restricted from being depressed, and it is possible to prevent the engagement between the lock pin 21 and the slide plate 62 from being released.

Next, a method of removing the wristwatch 100 from the wrist will be described.

When the wristwatch 100 is removed, in a case in which the lock member 71 is at the operation restriction position, the movement operation member 72 is moved to the X1 direction side to move the lock member 71 to the operation permission position. As a result, the recessed portion 712 of the lock member 71 can be disposed on the extension line of the projection portion 643 of the push button 64, and the push button 64 can be operated.

In a state in which the lock member 71 is at the operation permission position, each of the push buttons 64 is pressed to move the engagement portion 621 in a direction away from each other, and the middle plate 20 and the outer plate 30 that are folded are opened in a state in which the engagement between the lock pin 21 and the slide plate 62 is released. As a result, the umbrella portion 23 of the lock pin 21 passes through a space between the engagement portions 621 and is pulled out from an insertion hole 6111 of the guide frame 61. In this manner, the wristwatch 100 can be removed from the wrist.

### Effects of First Embodiment

According to the clasp 1 of the first embodiment, the push operation of the push button 64 is restricted by moving the lock member 71 to the operation restriction position, and the slide plate 62 cannot be moved to the release position. Therefore, even when an unintended external force is applied to the push button 64, the engagement between the slide plate 62 and the lock pin 21 can be maintained. Therefore, by moving the lock member 71 to the operation restriction position, it is possible to reliably prevent the clasp 1 from being removed during the diving or the like.

In addition, since the slide plate 62 and the push button 64 are configured separately and the lock member 71 has a structure that restricts only the push operation of the push button 64, the slide plate 62 can be engaged with the lock pin 21 without operating the push button 64 in a state in which the slide plate 62 is not engaged with the lock pin 21. Therefore, even when the lock member 71 is erroneously moved to the operation restriction position at the time of opening the clasp 1, that is, in a state in which the slide plate 62 is not engaged with the lock pin 21 by opening the middle fold member 2, the slide plate 62 can be moved to be engaged with the lock pin 21. Therefore, the wristwatch 100 having the clasp 1 can be reliably worn on the arm, without the clasp 1 in a state of not being closed or being damaged by forcibly closing the clasp 1.

In addition, since the slide plate 62 does not move when the movement operation member 72 is operated to move the lock member 71, it is also possible to prevent the slide plate 62 from moving and being removed with respect to the lock pin 21 when the operation permission position and the operation restriction position are switched.

In a state in which the lock member 71 is moved to the operation permission position, the clasp 1 can be opened by operating the push button 64. Therefore, in daily use, the operability when wearing or removing the wristwatch 100 does not deteriorate, and the wristwatch 100 can be used in the same operation as a normal clasp that is not provided with the lock device 70.

Since the slide plate 62 is abutted against the push button 64 by the coil spring 63, it is not necessary to separately provide a spring that biases the push button 64, which is separate from the slide plate 62. Accordingly, the number of components can be reduced, and the cost can be reduced. Furthermore, the push button 64 is provided with the projection portion 643, and the lock member 71 is provided with the recessed portion 712 that is disposed at a position facing the projection portion 643 at the operation permission position and removed from the position facing the projection portion 643 at the operation restriction position. Therefore, it is possible to switch between the permission and the restriction of the push operation of the push button 64, and thus it is not necessary to adopt a complicated structure, and the cost can be reduced in this respect.

In addition, the projection portion 643 of the push button 64 is disposed and guided between the guide portions 614 and 615 in the X axis direction, and is disposed and guided between the slide plate 62 and the clasp cover 40 in the Z axis direction. Therefore, it is possible to suppress the inclination of the push button 64 in the X axis direction and the Z axis direction. Furthermore, the projection portion 643 of the push button 64 is formed with a relatively long dimension in the Y axis direction and is disposed along the surface of the slide plate 62, so that the push button 64 can be smoothly moved in the Y axis direction. Therefore, it is possible to prevent the inner surface of the elongated hole 421 of the clasp cover 40 and the push button 64 from coming into strong contact with each other, to reduce the frictional resistance when the push button 64 is operated, and to prevent the push button 64 and the clasp cover 40 from being damaged.

The lock device 70 can hold the lock member 71 at the operation permission position and the operation restriction position by engaging the protrusion portion 724 of the movement operation member 72 with the holding portion 453 of the position holding component 45, and can prevent the unintended movement of the lock member 71.

The position holding component 45 that restricts the movement of the movement operation member 72 and the lock member 71 is disposed between the pair of guide portions 723 of the movement operation member 72, and the pair of holding portions 453 of the position holding component 45 is configured to apply a load in the Y1 direction and the Y2 direction, that is, in a direction orthogonal to the movement direction of the lock member 71. Therefore, the lock device 70 can be configured compactly, and the clasp 1 can also be configured compactly.

Since the guide portion 723 of the movement operation member 72 has the movement direction restricting surface 7231 provided along the guide surface 415 of the opening 412, the movement operation member 72 can be smoothly moved in the X axis direction, and the movement operation member 72 can be prevented from being inclined when the movement operation member 72 is operated. Therefore, the operability of the movement operation member 72 can be improved.

Furthermore, when the lock member 71 is moved to the operation permission position and the operation restriction position by operating the movement operation member 72, the operation feeling of the movement operation member 72 can be obtained by the protrusion portion 724 of the movement operation member 72 riding over the holding portion 453 of the position holding component 45. Therefore, by setting the material of the position holding component 45, the shape of the holding portion 453, the shape of the protrusion portion 724, and the like, and adjusting the operation load, the operation feeling of the movement operation member 72 can be appropriately set.

The lock member 71 is disposed between the front surface portion 41 of the clasp cover 40 and the engagement unit 60, and the lock member 71 and the engagement unit 60 are disposed to overlap in the Z axis direction. Therefore, the length dimension of the clasp main body 4 in the X axis direction can be shortened as compared with a case where the lock member is disposed on the side of the engagement unit 60, that is, in the X axis direction. In addition, since the elongated hole 714 is formed in the lock member 71 to prevent interference with the lock pin 21, it is not necessary to dispose the lock member 71 to be shifted in the X axis direction with respect to the lock pin 21, and the length dimension of the clasp main body 4 in the X axis direction can be shortened in this respect. In addition, since it is not necessary to set the height position of the lock member 71 in the Z axis direction to be higher than that of the umbrella portion 23 of the lock pin 21, the thickness dimension of the clasp main body 4 can also be reduced.

The lock member 71 and the movement operation member 72 are coupled to each other by the fixing screw 73 through the opening 412 of the clasp cover 40. Therefore, the movement operation member 72 can be disposed at the center in the width direction on the front surface portion 41 of the clasp cover 40, and the opening 412 can be hidden. Therefore, the appearance of the clasp 1 can be improved.

Since the logo display portion 7211 is provided on the movement operation member 72, the logo, such as the brand or the manufacturer, can be displayed, the brand name or the manufacturer name can be emphasized, and the appearance of the clasp 1 can be further improved. In addition, since the movement operation member 72 is coupled to the lock member 71 with the fixing screw 73, the movement operation member 72 can be replaced, and the maintenance can be easily performed when the movement operation member 72 is scratched or the like. Furthermore, the material of the movement operation member 72 can be made different from that of the lock member 71, and customization using different materials can also be realized.

The lock member 71 is slid and moved in the coupling direction of the clasp main body 4 and the first strap, that is, in the longitudinal direction of the first strap 11 and the second strap 12. Therefore, the lock member 71 can be easily moved to both the operation restriction position and the operation permission position.

Since the holding portion 453 is provided at the intermediate position between the base portion 451 and the locking portion 454 of the position holding component 45, the biasing force for biasing the protrusion portion 724 can be set to an appropriate value. In addition, since the inclination angles of the first inclined surface portion 4531 and the second inclined surface portion 4532 of the holding portion 453 and the inclination angle of the protrusion portion 724 can be freely set, the setting of the operation load when the lock device 70 is slid and moved can be adjusted, and the operability can be improved.

### Second Embodiment

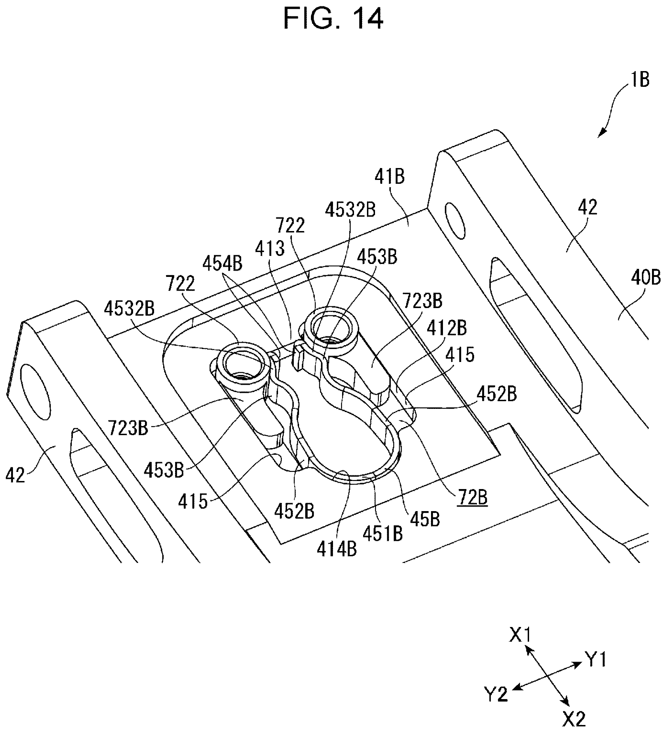

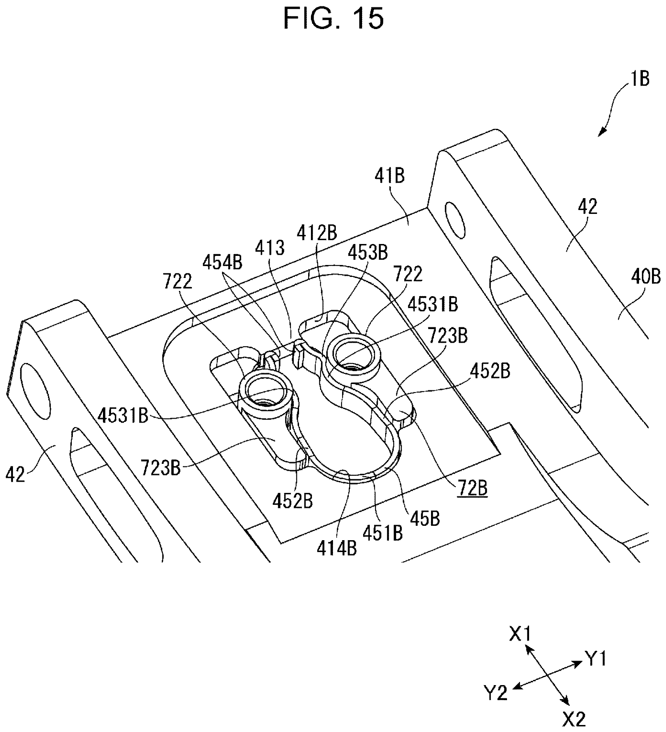

A clasp 1B of a second embodiment will be described with reference to FIGS. 14 and 15.

Since the clasp 1B differs from that of the first embodiment in the configuration of a clasp cover 40B, a movement operation member 72B, and a position holding component 45B, and the other configurations are the same as those of the first embodiment, the same reference numerals are applied thereto, and the description will be simplified or omitted.

The shape of an opening 412B of a front surface portion 41B of the clasp cover 40B is changed in accordance with the position holding component 45B. That is, the opening 412B includes the same projection portion 413 and the guide surface 415 as those of the first embodiment. On the other hand, a recessed portion 414B is different from that of the first embodiment in that the recessed portion 414B is a curved recessed portion.

The position holding component 45B is formed by bending a metal material in the same manner as the position holding component 45, and includes a base portion 451B, a pair of extension portions 452B, a pair of holding portions 453B, and a pair of locking portions 454B.

The base portion 451B is formed to be curved in a plan view, and is disposed along the curved recessed portion 414B. The extension portion 452B extends from the base portion 451B in the substantially X1 direction, and is formed to approach each other as going in the X1 direction.

The holding portion 453B includes a first inclined surface portion 4531B that is continuously formed at the extension portion 452B and is inclined in a direction away from each other as going in the X1 direction, and a second inclined surface portion 4532B that is continuously formed at the first inclined surface portion 4531B and is inclined in the direction approaching each other as going in the X1 direction. Therefore, the holding portion 453B has a protruding shape in which the coupling portion of the first inclined surface portion 4531B and the second inclined surface portion 4532B protrudes toward the outside.

The locking portion 454B is continuously formed at the second inclined surface portion 4532B and is folded back inward.

The position holding component 45B is disposed at the opening 412B of the clasp cover 40B by disposing the base portion 451B in the recessed portion 414B and causing the locking portion 454B to abut against the projection portion 413.

The movement operation member 72B includes a fixing shaft portion 722 and a guide portion 723B. The fixing shaft portion 722 is formed in a substantially cylindrical shape in the same manner as the fixing shaft portion 722 of the first embodiment. In addition, the guide portion 723B is different from the guide portion 723 of the first embodiment in that the protrusion portion 724 is not formed. Therefore, in the movement operation member 72B, the fixing shaft portion 722 functions as a protrusion portion. That is, as illustrated in FIG. 14, the fixing shaft portion 722 abuts against the second inclined surface portion 4532B at the operation permission position, and the movement of the fixing shaft portion 722 in the X2 direction is restricted. In addition, as illustrated in FIG. 15, the fixing shaft portion 722 abuts against the first inclined surface portion 4531B at the operation restriction position, and the movement of the fixing shaft portion 722 in the X1 direction is restricted. Therefore, the movement operation member 72B is restricted from moving in the X axis direction by the fixing shaft portion 722 being engaged with the holding portion 453B. When the user operates the movement operation member 72B to move in the X axis direction, the holding portion 453B is pressed by the fixing shaft portion 722 and is deformed in the direction approaching each other. When the fixing shaft portion 722 rides over the holding portion 453B, the holding portion 453B returns to the original position by the spring property of the position holding component 45B.

Therefore, also in the clasp 1B of the second embodiment, the user can obtain a click feeling when operating the movement operation member 72B, and can easily confirm that the operation is switched to the operation permission position and the operation restriction position, as in the first embodiment. In addition, since the configuration other than the clasp cover 40B, the position holding component 45B, and the movement operation member 72B is the same as that of the first embodiment, the same effect as that of the first embodiment can be obtained.

### Third Embodiment

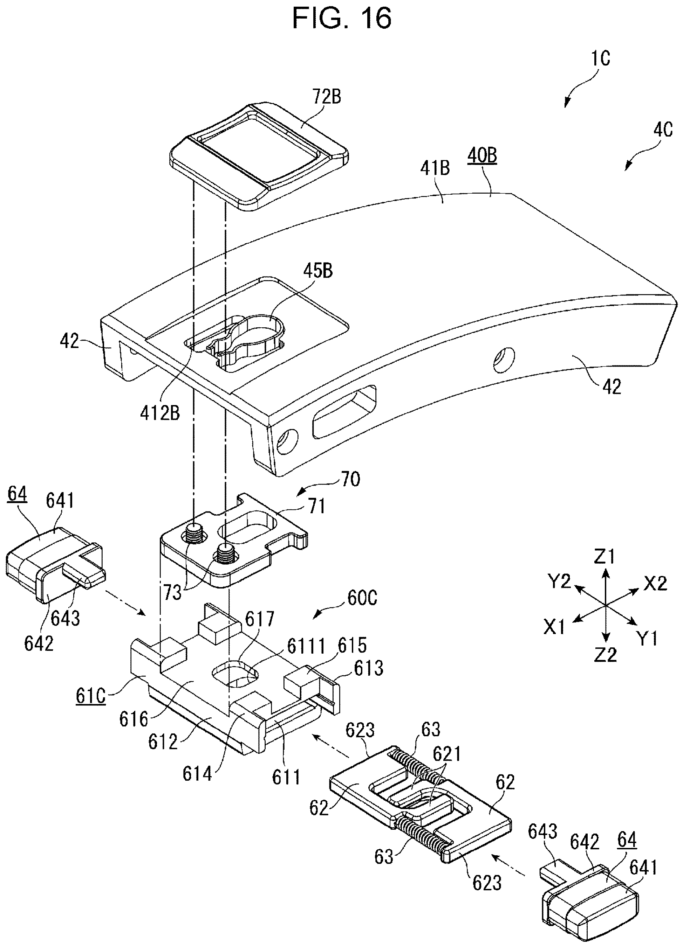

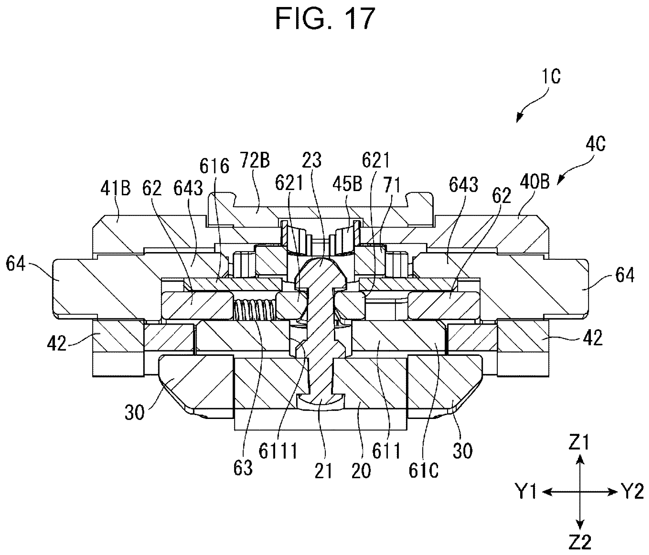

A clasp 1C of the third embodiment will be described with reference to FIGS. 16 and 17.

A clasp main body 4C of the clasp 1C includes a clasp cover 40B, an engagement unit 60C, and a lock device 70. The clasp cover 40B is the same as that of the second embodiment, and the position holding component 45B is disposed at the opening 412B. The engagement unit 60C includes a guide frame 61C different from that of the first embodiment, and the slide plate 62, the coil spring 63, and the push button 64 that are the same as those of the first embodiment.

The guide frame 61C is different from the guide frame 61 of the first embodiment in that a front surface portion 616 is continuously formed in the X axis direction and the through-hole 617 in which the lock pin 21 can be disposed at the center in the X axis direction and the Y axis direction is formed. Therefore, in the guide frame 61C, the slide plate 62 is disposed in a hollow tubular space defined by the bottom surface portion 611, the front surface portion 616, and the side surface portions 612 and 613. Therefore, as illustrated in FIG. 17, the projection portion 643 of the push button 64 is disposed along the surface of the front surface portion 616.

In the clasp 1C of the third embodiment, the same effect as that of the first and second embodiments can be obtained, and the front surface portion 616 of the guide frame 61C is continuously formed in the X axis direction, and the projection portion 643 of the push button 64 is disposed along the surface of the front surface portion 616. Therefore, the inclination of the push button 64 can be prevented, similar to the first and second embodiments. In addition, since the projection portion 643 and the slide plate 62 are defined by the front surface portion 616 and are not in contact with each other, the slide plate 62 and the push button 64 can be smoothly moved in the Y axis direction.

### Modification Example

The present disclosure is not limited to the above-described embodiments, and modifications, improvements, and the like within the scope of achieving the object of the present disclosure are included in the present disclosure.

The configurations of the engagement member and the engaged portion are not limited to the configurations of the embodiments. For example, a configuration may be adopted in which an engagement member moves in the X axis direction and engages with an engaged portion. That is, the engaged portion is constituted by forming a protrusion portion protruding toward the X2 direction side and an engagement groove opened on the X2 direction side on the middle plate 20. In addition, the engagement member is provided which is biased on the X1 direction side and abuts against a push button on the inclined surface to move on the X2 direction side when the push button is pressed. Even in such a configuration, the same effect as that of each of the embodiments can be obtained by providing the lock member that can restrict the push operation of the push button.

In addition, the operation member is not limited to the pair of push buttons, and may be one button, may be only a lever, a rotary knob, or the like, and may be a member that can move an engagement member such as a slide plate 62 by an operation such as a push operation, a slide operation, or a rotation operation.

A biasing unit is not limited to the coil spring 63 separated from the slide plate 62, and various spring members, such as a torsion spring, can be used. Furthermore, a spring portion may be formed integrally with an engagement member, such as the slide plate 62, and the engagement member also may be served as a biasing member.

In addition, the lock member 71 and the movement operation member 72 are not limited to being coupled to each other with the fixing screw 73, and may be coupled to each other by bonding, welding, or the like. That is, the lock device is not limited to the configuration of the above-described embodiments, and may be a member that can switch between the restriction and the permission of the operation of the operation member, such as the push button 64.

The lock device 70 is not limited to the device in which the protrusion portion 724 is formed at the movement operation member 72, and the protrusion portion may be formed at the lock member 71. The guide portion 723 of the lock device 70 is not limited to the one including the planar movement direction restricting surface 7231 along the guide surface 415, and may be the one including a plurality of protrusions that can abut against the guide surface 415, or may be a structure that is guided along the guide surface 415.

The position holding components 45 and 45B are not limited to being made of metal, and may be made of synthetic resin or the like. In addition, the shape and structure of the position holding component are not limited to the above embodiment, and the lock device 70 may be moved to the operation permission position and the operation restriction position, and may be held at each position.

The clasp 1 is not limited to the timepiece strap, and for example, can also be used as a strap for an ornament, such as a bracelet or a necklace.

### Summary of Present Disclosure

According to an aspect of the present disclosure, there is provided a clasp that couples a first strap and a second strap, the clasp including a coupling member coupled to a first strap side and including an engaged portion, and a clasp main body coupled to a second strap side, in which the clasp main body includes an engagement member configured to move to an engagement position where the engagement member is configured to engage with the engaged portion and a release position where the engagement member is configured to release an engagement with the engaged portion, an operation member configured to move the engagement member from the engagement position to the release position, and a lock device configured to move to an operation restriction position where an operation of the operation member is restricted and an operation permission position where the operation of the operation member is permitted, in a state in which the lock device is at the operation restriction position or the operation permission position, the engagement member is configured to be engaged with the engaged portion without operating the operation member in a state in which the engagement member is not engaged with the engaged portion, the engagement is released by moving the engagement member to the release position by the operation member in a state in which the engagement member is engaged with the engaged portion, when the lock device is moved to the operation restriction position, the engagement member is restricted from moving to the release position by the operation member, and the operation member includes a projection portion configured to protrude toward the engagement member side.

According to the present disclosure, by moving the lock device to the operation restriction position, the movement of the engagement member to the release position is restricted, and the engagement state between the engagement member and the engaged portion can be maintained even when an unintended external force is applied to the operation member. Therefore, by moving the lock device to the operation restriction position, it is possible to prevent the clasp from being removed during the diving or the like.

In addition, in a state in which the engagement member and the operation member are separate, the lock device only restricts the operation of the operation member, and the engagement member is not engaged with the engaged portion, the engagement member can be engaged with the engaged portion without operating the operation member. Therefore, even when the lock device is erroneously moved to the operation restriction position in a state in which the engagement of the clasp is released, that is, in a state in which the engagement member is not engaged with the engaged portion, the engagement member can be engaged with the engaged portion. Therefore, it is possible to prevent the state in which the clasp does not close or the clasp from being damaged when trying to forcibly close the clasp.

Furthermore, since the operation member includes the projection portion that protrudes toward the engagement member side, the play of the operation member can be suppressed.

In the clasp of the present disclosure, the lock device may include an abutment surface configured to abut against the projection portion when the operation member is operated in a state in which the lock device is at the operation restriction position, and a recessed portion into which the projection portion is inserted when the operation member is operated in a state in which the lock device is at the operation permission position.

According to the present disclosure, by forming the abutment surface and the recessed portion on the side surface of the lock device, it is possible to switch between the operation restriction state and the operation permission state, and thus the configuration of the lock device can be simplified and the manufacturing cost can be reduced.

In the clasp of the present disclosure, the clasp may further include a cover member, and in a side view, the projection portion of the operation member may be disposed in a space provided between the cover member and the engagement member.

According to the present disclosure, since the projection portion of the operation member is disposed between the cover member and the engagement member, the operation member can be restricted from moving in the thickness direction of the clasp main body. Therefore, it is possible to prevent the operation member from being inclined in the thickness direction and coming into strong contact with the inner surface of the hole into which the operation member is inserted in the clasp cover, and it is possible to reduce the resistance when operating the operation member and to prevent the occurrence of scratches.

In the clasp of the present disclosure, the clasp may further include a position holding component configured to hold the lock device in a state of being moved to the operation permission position and the operation restriction position.

According to the present disclosure, since the position holding component can hold the position of the lock device, the lock device can be moved only when the user operates the lock device. Therefore, it is possible to prevent the lock device from moving to the operation permission position without operating by the user, and it is possible to reliably hold the lock device at the operation permission position and the operation restriction position.

In the clasp of the present disclosure, the lock device may include a pair of protrusion portions configured to protrude toward a position holding component side, the position holding component may include a pair of holding portions disposed between the pair of protrusion portions and configured to be engaged with and hold each protrusion portion, and when the lock device moves between the operation restriction position and the operation permission position, the pair of holding portions may be pressed by the pair of protrusion portions to be elastically deformed, and the protrusion portion may be configured to be moved by riding over the holding portion.

According to the present disclosure, when the pair of protrusion portions of the lock device is engaged with the pair of holding portions of the position holding component, and the lock device is moved to the operation restriction position and the operation permission position, the holding portion is pressed by the protrusion portion and elastically deformed, and when the protrusion portion rides over the holding portion, the holding portion returns to the original engagement position. Therefore, the user can obtain a click feeling when moving the lock device, and can easily recognize that the lock device is moved to the operation permission position or the operation restriction position.

In the clasp of the present disclosure, the clasp may further include a cover member, and the cover member may include a guide surface formed along a movement direction of the lock device, and the lock device may include a guide portion guided by the guide surface of the cover member.

According to the present disclosure, since the guide portion of the lock device can be guided by the guide surface of the cover member, the lock device can be smoothly moved.

In the clasp of the present disclosure, the clasp main body may include a biasing member configured to bias the engagement member to an engagement position side, and at least one of the engaged portion and the engagement member may have a guide surface that moves the engagement member from the engagement position to the release position against a biasing force of the biasing member when the engagement member abuts against the engaged portion.

In the present disclosure, when the engagement member abuts against the engaged portion, the engagement member can be moved from the engagement position to the release position against the biasing force of the biasing member. Therefore, from the state in which the clasp is opened, the clasp can be easily closed only by abutting the coupling member and the clasp main body against each other.

In the clasp of the present disclosure, the lock device may include a movement operation member operated by a user, and the movement operation member may include a logo display portion on which a logo is displayed.

In the present disclosure, the logo can be displayed on the movement operation member operated by the user in the lock device, and thus the brand power and the like can be enhanced.

In the clasp of the present disclosure, the lock device may be moved in a coupling direction in which the clasp main body and the first strap are coupled.

In the present disclosure, the lock device is slid and moved in the coupling direction of the clasp main body and the first strap, that is, in the longitudinal direction of the first strap and the second strap. Therefore, the lock device can be easily moved to both the operation restriction position and the operation permission position.

A strap of the present disclosure includes the above-described clasp, the first strap, and the second strap that are coupled to the clasp.

In the strap of the present disclosure, even when the lock device is erroneously moved to the operation restriction position, the engagement member can be engaged with the engaged portion. Therefore, the strap having the clasp of the present disclosure can be reliably worn on the arm or the like.

The timepiece of the present disclosure includes the strap described above.

In the timepiece of the present disclosure, even when the lock device is erroneously moved to the operation restriction position, the engagement member can be engaged with the engaged portion. Therefore, the timepiece having the clasp of the present disclosure can be reliably worn on the arm.

## Claims

1. A clasp that couples a first strap and a second strap, the clasp comprising:
a coupling member coupled to a first strap side and including an engaged portion; and
a clasp main body coupled to a second strap side, wherein
the clasp main body includes
an engagement member configured to move to an engagement position where the engagement member is configured to engage with the engaged portion and a release position where the engagement member is configured to release an engagement with the engaged portion,
an operation member configured to move the engagement member from the engagement position to the release position, and
a lock device configured to move to an operation restriction position where an operation of the operation member is restricted and an operation permission position where the operation of the operation member is permitted,
in a state in which the lock device is at the operation restriction position or the operation permission position, the engagement member is configured to be engaged with the engaged portion without operating the operation member in a state in which the engagement member is not engaged with the engaged portion,
the engagement is released by moving the engagement member to the release position by the operation member in a state in which the engagement member is engaged with the engaged portion,
when the lock device is moved to the operation restriction position, the engagement member is restricted from moving to the release position by the operation member, and
the operation member includes
a projection portion configured to protrude toward the engagement member side.

2. The clasp according to claim 1, wherein
the lock device includes
an abutment surface configured to abut against the projection portion when the operation member is operated in a state in which the lock device is at the operation restriction position, and
a recessed portion into which the projection portion is inserted when the operation member is operated in a state in which the lock device is at the operation permission position.

3. The clasp according to claim 1, further comprising:
a cover member, wherein
in a side view, the projection portion of the operation member is disposed in a space provided between the cover member and the engagement member.

4. The clasp according to claim 1, further comprising:
a position holding component configured to hold the lock device in a state of being moved to the operation permission position and the operation restriction position.

5. The clasp according to claim 4, wherein
the lock device includes
a pair of protrusion portions configured to protrude toward a position holding component side,
the position holding component includes
a pair of holding portions disposed between the pair of protrusion portions and configured to be engaged with and hold each protrusion portion, and
when the lock device moves between the operation restriction position and the operation permission position, the pair of holding portions is pressed by the pair of protrusion portions to be elastically deformed, and the protrusion portion is configured to be moved by riding over the holding portion.

6. The clasp according to claim 1, further comprising:
a cover member, wherein
the cover member includes
a guide surface formed along a movement direction of the lock device, and the lock device includes
a guide portion guided by the guide surface of the cover member.

7. The clasp according to claim 1, wherein
the clasp main body includes
a biasing member configured to bias the engagement member to an engagement position side, and
at least one of the engaged portion and the engagement member has a guide surface that moves the engagement member from the engagement position to the release position against a biasing force of the biasing member when the engagement member abuts against the engaged portion.

8. The clasp according to claim 1, wherein
the lock device includes
a movement operation member operated by a user, and
the movement operation member includes
a logo display portion on which a logo is displayed.

9. The clasp according to claim 1, wherein
the lock device is moved in a coupling direction in which the clasp main body and the first strap are coupled.

10. A strap comprising:
the clasp according to claim 1; and
the first strap and the second strap that are coupled to the clasp.

11. A timepiece comprising:
the strap according to claim 10.
